# EUROPÄISCHE PATENTSCHRIFT

(11) **EP 1 671 098 B1**
(45) Veröffentlichungstag und Bekanntmachung des Hinweises auf die Patenterteilung: **10.12.2014**
(21) Anmeldenummer: 04790227.5
(22) Anmeldetag: 08.10.2004
(51) Int. Cl.: G01N 1/10

(54) **TRAGBARER PROBENEHMER**
PORTABLE SAMPLER
DISPOSITIF PORTABLE POUR LE PRELEVEMENT D'ECHANTILLONS

(30) Priorität: 09.10.2003 DE 10347626
(43) Veröffentlichungstag der Anmeldung: 21.06.2006
(73) Patentinhaber: Endress+Hauser Conducta Gesellschaft für Mess- und Regeltechnik mbH & Co. KG, 70839 Gerlingen (DE)
(72) Erfinder: ZINTH, Peter, 87474 Buchenberg (DE); STÜCKL, Tobias, 87435 Kempten (DE); STEIDLE, Wolfgang, 87439 Kempten (DE)
(74) Vertreter: Andres, Angelika Maria
(86) Internationale Anmeldenummer: PCT/EP2004/011295
(87) Internationale Veröffentlichungsnummer: WO 2005/036134

(56) Entgegenhaltungen:
- WO-A-92/08963
- DE-A1- 2 824 153
- DE-A1- 10 252 158
- DE-U1- 29 722 468
- US-A- 4 083 226
- US-B1- 6 354 345
- ANONYMOUS: "Isco 3780 Zone 1-rated Sampler" ISCO PRODUCT DATA, [Online] Februar 2002 (2002-02), XP002316557 Gefunden im Internet: URL:www.isco.com> [gefunden am 2005-02-04]
- ANONYMOUS: "Isco 3780 Zone 1-rated Sampler" INSTALLATION AND OPERATION GUIDE, [Online] August 2003 (2003-08), XP002316558 Gefunden im Internet: URL:www.isco.com> [gefunden am 2005-02-04]

## Beschreibung

Die Erfindung bezieht sich auf einen tragbaren Probenehmer mit einem Gehäuse, in dem mindestens folgende Komponenten angeordnet sind: eine Pumpe mit einer ersten Antriebseinheit, ein Sensor zur Bestimmung der Probemenge, die von der Pumpe gefördert wird, eine Steuereinheit, die die Entnahme einer gewünschten Probemenge und das Abfüllen in zumindest ein Behältnis steuert, und mindestens eine Energiespeichereinheit, die die Energie zum Betreiben der ersten Antriebseinheit, des Sensors und der Steuereinheit bereitstellt.

Probenehmer der vorgenannten Art werden sind beispielsweise in der DE-U 297 22 468, der DE-A 102 52 158, der DE-A 28 24 153, der WO-A 95/02176, der US-A 44 15 011 beschrieben und werden von der Anmelderin selbst unter den Bezeichnungen Liqui-Port und Liqui-Box angeboten und vertrieben. Insbesondere ist der in der DE-U 297 22 468 beschrieben Probenehmer auch für den Einsatz in einem explosionsgefährdeten Bereich vorgesehen.

Ein weiterer gattungsgemäßer Probennehmer ist aus US 6,354,345 B1 bekannt.

An Geräte, die in explosionsgefährdeten Bereichen einsetzbar sind, werden besondere Sicherheitsanforderungen gestellt. Diese haben das Ziel eine Funkenbildung, die ggf. eine Explosion auslösen könnte, zu vermeiden oder zu verhindern, dass ein im Inneren eines abgeschlossenen Raumes entstehender Funke Auswirkungen auf die Umgebung hat. Dieses Ziel ist auf verschiedene Arten, die in entsprechenden Europäischen Normen als Zündschutzarten bezeichnet sind, erreichbar. So ist z.B. gemäss der Europäischen Norm EN 50 020 aus dem Jahr 1994 Explosionsschutz gegeben, wenn Geräte gemäss der darin definierten Schutzklasse mit dem Namen 'Eigensicherheit' (EEx 'ib') ausgebildet sind. Gemäss dieser Schutzklasse haben die Werte für die elektrischen Grössen Strom, Spannung, umgesetzte bzw. umsetzbare Leistung und gespeicherte oder speicherbare Energie in einem Gerät zu jeder Zeit jeweils unterhalb eines vorgegebenen Grenzwertes zu liegen. Die Grenzwerte sind so gewählt, dass im Fehlerfall, z.B. durch einen Kurzschluss, die maximal entstehende Wärme nicht ausreicht, um einen Zündfunken zu erzeugen. Der Strom wird z.B. durch Widerstände, die Spannung z.B. durch Zener-Dioden und die Leistung durch entsprechende Kombination von strom- und spannungsbegrenzenden Bauteilen unter den vorgegebenen Grenzwerten gehalten. In der Europäischen Norm EN 50 019 aus dem Jahr 1994 ist eine weitere Schutzklasse mit dem Namen 'Erhöhte Sicherheit' (EEx 'e') angegeben. Bei Geräten, die gemäss dieser Schutzklasse ausgebildet sind, wird der Explosionsschutz dadurch erzielt, dass die räumlichen Abstände zwischen zwei verschiedenen elektrischen Potentialen so gross sind, dass eine Funkenbildung auch im Fehlerfall aufgrund der Distanz nicht auftreten kann. Dies kann jedoch unter Umständen dazu führen, dass Schaltungsanordnungen sehr grosse Abmessungen aufweisen müssen, um diesen Anforderungen zu genügen. Eine weitere unter der Bezeichnung 'Druckfeste Kapselung' (EEx 'd') geführte Schutzklasse ist in der Europäischen Norm EN 50 018 aus dem Jahr 1994 beschrieben. Geräte die gemäss dieser Schutzklasse ausgebildet sind, weisen ein druckfestes Gehäuse auf, durch das sichergestellt ist, dass eine im Inneren des Gehäuses auftretende Explosion nicht in den Aussenraum übertragen werden kann. Druckfeste Gehäuse sind, damit sie eine ausreichende mechanische Festigkeit aufweisen, dickwandig und damit schwer und teuer. In den USA, in Kanada, in Japan und anderen Ländern gibt es mit diesen Europäischen Normen vergleichbare Standards.

Der in der DE-U 297 22 468 beschriebene Probnehmer ist zum Zwecke der Gewährleistung einer ausreichenden Explosionssicherheit mit einer von einer zusätzlichen Strom- und Druckluftversorgung gespeisten Explosionsschutzeinrichtung ausgestattet, wobei praktisch sämtliche elektrischen Komponenten des Probenehmers gemeinsam in dem einzigen explosionsgesicherten Gehäuse untergebracht sind. Allerdings ist ein Nachteil dieser Explosionsschutzeinrichtung darin zu sehen, daß deren Strom- und Druckluftversorgung selbst potentiell ausfallen kann, wodurch wiederum der Explosionsschutz für den gesamten Probenehmer unvermittelt und plötzlich außer Funktion gesetzt würde. Ein weiterer Nachteil dieses Probenenehmers besteht aber auch darin, daß die zusätzliche Strom- und Druckluftversorgung auch eine erhebliche Zunahme des Gewichts des Probenehmers bewirken, was wiederum des Portabilität, jedenfalls aber dessen Tragbarkeit erheblich verschlechtert.

Das Datenblatt" Isco 3780 Zone 1-rated Sampler", Isco Product Data, Februar 2002, beschreibt einen Probennehmer zur Anwendung in IEC Zone 1 mit zeitweise vorhandenen zündbaren Konzentrationen explosiver Gase. Als Zündschutzmaßnahme ist bei diesem Probennehmer vorgesehen, spezielle Batterien zu verwenden und Komponenten der Steuerung in einem gegossenen Aluminiumgehäuse unterzubringen.

Der Erfindung liegt die Aufgabe zugrunde, einen möglichst leichten, insb. tragbaren, und einfach handhabbaren portablen Probenehmer für den Einsatz in einem explosionsgefährdeten Bereich bereitzustellen.

Die Aufgabe wird dadurch gelöst, dass Komponenten des Probenehmers wie z.B. eine Pumpeinheit mit einer ersten Antriebseinheit, ein Sensor zur Bestimmung der Probemenge, die von der Pumpeinheit gefördert wird, eine Steuereinheit, die die Entnahme einer gewünschten Probemenge und das Abfüllen in zumindest ein Behältnis steuert, eine Energieversorgungseinheit, die die Energie zum Betreiben der ersten Antriebseinheit, des Sensors und der Steuereinheit bereitstellt oder dergleichen, modular aufgebaut sind und dass jedes dieser Module so ausgestaltet ist, dass es einer vorgegebenen Zündschutzart genügt, wobei die Steuereinheit so ausgestaltet ist, dass sie gleichzeitig der Zündschutzart 'EEx ib'und der Zündschutzart 'Eex m'genügt, wobei die Energieversorgungseinheit so ausgestaltet ist, dass sie der Zündschutzart 'EEx e'genügt, wobei die erste Antriebseinheit so ausgestaltet ist, dass sie der Zündschutzart 'EEx d'genügt, und wobei das Sensormodul so ausgestaltet ist, dass es der Zündschutzart 'EEx ib'genügt. Die Zündschutzarten lassen sich so individuell optimal an die speziellen Erfordernisse der jeweiligen Komponente anpassen. Der Probennehmer ist somit für den Einsatz in einem explosionsgefährdeten Bereich geeignet. Aufgrund des relativ geringen Gewichts lässt sich der erfindungsgemäße Probenehmer einfach an den jeweils gewünschten Einsatzort transportieren. Gemäss einer vorteilhaften Ausgestaltung des erfindungsgemässen Probenehmers handelt es sich bei der ersten Antriebseinheit um einen Motor zum Betreiben einer Pumpe. Weiterhin ist eine zweite Antriebseinheit zum automatischen Abfüllen von Proben in eine Vielzahl von Behältnissen vorgesehen, wobei auch die zweite Antriebseinheit modular aufgebaut ist und einer vorgegebenen Zündschutzart genügt.

Nach einer Ausgestaltung des Probenehmers sind die erste Antriebseinheit und die zweite Antriebseinheit so ausgestaltet, dass sie der Zündschutzart EEx 'd' genügen. Hinter dieser Zündschutzart verbirgt sich eine druckfeste Kapselung der beiden Antriebseinheiten Mit dieser Ausgestaltung sind die Antriebseinheiten in Umgebungen einsetzbar, in denen gelegentlich eine explosionsfähige Atmosphäre herrscht oder wo selten und kurzzeitig eine explosionsfähige Atmosphäre auftreten kann. Eine derartige Atmosphäre kann beispielsweise in Zusammenhang mit der Entnahme von Proben aus einem Abwasserkanal auftreten.

Eine vorteilhafte Ausgestaltung des erfindungsgemässen Probenehmers sieht vor, dass es sich bei der Pumpe um eine Schlauchpumpe und bei dem Sensor um einen Drucksensor handelt, der anhand der Druckschwankungen in einer Leitung der Druckpumpe die durch die Leitung strömende Probemenge bestimmt.

Das Sensormodul ist so ausgestaltet, dass es der Zündschutzart EEx 'ib" genügt, das bedeutet, dass das Sensormodul eigensicher ist, was heisst, dass die dem Sensormodul zugeführte Energie nicht zur Funkenbildung ausreichend ist. Zudem sind alle sicherheitswesentlichen Komponenten des Sensormoduls zweifach und redundant ausgelegt.

Die Energieversorgungseinheit ist so designt und konfiguriert, dass sie der Zündschutzart EEx `e' genügt. Hinter dieser Bezeichnung verbirgt sich eine erhöhte Sicherheitsstufe. Aufgrund der zuvor genannten Ausgestaltungen sind auch diese Komponenten in Umgebungen einsetzbar, in denen eine explosionsfähige Atmosphäre temporär auftreten kann.

Eine Ausgestaltung des erfindungsgemässen Probenehmers sieht an dem Gehäuse der Energieversorgungseinheit eine Membran vor, die den Gasaustausch zwischen dem Innenraum und dem Aussenraum des Gehäuses ermöglicht. Bei der Energieversorgungseinheit handelt es sich z.B. um einen Akku. Durch ein Design, das die Anforderungen der Zündschutzart EEx 'e' erfüllt, kann die Batterie bzw. der Versorgungsakku in das Gehäuse des Probenehmers integriert werden. Die Membran, bei der es sich bevorzugt um eine Goretex®-Membran handelt, ist in den Deckel des Gehäuses integriert, in dem der Akku untergebracht ist, und gewährleistet einen Luftaustausch mit der Umgebung. Hierdurch wird während des Ladevorgangs eine erhöhte Wasserstoffkonzentration im geschlossenen Gehäuse vermieden.

Die Steuereinheit genügt gleichzeitig der Zündschutzart 'EEx ib' und der Zündschutzart 'EEx m'. Die zuerst genannte Zündschutzart bedeutet, dass die Steuereinheit eigensicher ausgelegt ist; weiterhin hat sie eine Kapselung. Bei der Kapselung handelt es sich beispielsweise um eine Vergusskapselung, eine Ölkapselung oder eine Sandkapselung. Insbesondere sind die Sicherungen vergossen.

Gemäß einer Ausgestaltung des erfindungsgemässen Probenehmers ist als Kühleinheit ein Zeolith-Adsorptionsaggregat vorgesehen. Dies ist insofern günstig, da ein Zeolith-Adsorptionsaggregat im Hinblick auf den

Einsatz in explosionsgefährdeten Bereichen völlig unproblematisch ist. Zeolith-Adsorptionsaggregate werden bereits bei einem Gerät, das von der Anmelderin angeboten und vertrieben wird, eingesetzt.

Darüber hinaus wird gemäss einer vorteilhaften Ausgestaltung des erfindungsgemässen Probenehmers vorgeschlagen, die Aussenfläche des Gehäuses UV-stabilisiert, also resistent gegen UV-Strahlen, und antistatisch auszubilden. Antistatisch bzw. leitfähig bedeutet hierbei, dass der Oberflächen-widerstand kleiner ist als 1GΩ. Hierdurch wird ein Aufladen des Gehäuses des Probenehmers vermieden.

Ein Grundgedanke der Erfindung besteht also darin, einzelne Komponenten des Probenehmers, beispielsweise also die Pumpeinheit, den Sensor zur Bestimmung der Probemenge, die Steuereinheit, die Energieversorgungseinheit oder andere Komponenten, einerseits modular aufzubauen und anderseits jedes dieser Module so auszugestalten, dass es für sich genommen einer vorgegebenen Zündschutzart, insb. der Zündschutzart EEx 'd', der Zündschutzart EEx'e`, der Zündschutzart 'EEx ib', der Zündschutzart 'EEx m', genügt. Ein weiterer Grundgedanke der Erfindung besteht außerdem darin, die Zündschutzarten jedes dieser Module individuell optimal an die speziellen Anforderungen, die an die jeweilige Komponente gestellt sind, anzupassen, insb. so, daß trotz der der Explosionssicherheit des Probenehmers dieser ein möglichst geringes Probenehmer-Gesamtgewicht und eine handhabbare Probenehmer-Gesamtgröße aufweist.

Die Erfindung wird anhand der nachfolgenden Zeichnungen näher erläutert.

Es zeigen:
- Fig. 1:: eine schematische Darstellung des erfindungsgemäßen Probenehmers; und
- Fig. 2:: eine Explosionsdarstellung des erfindungsgemässen Probenehmers mit dem modularen Aufbau der einzelnen Komponenten.

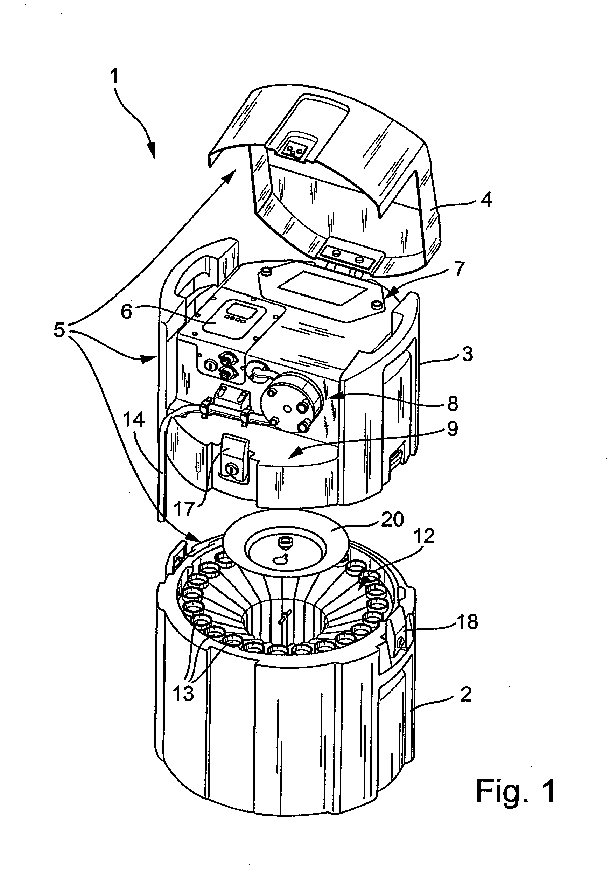

Fig. 1 zeigt eine schematische Darstellung des erfindungsgemäßen Probenehmers 1. Der Probenehmer 1 ist transportabel ausgebildet und dient zur diskontinuierlichen Entnahme und Aufbewahrung von Proben aus z.B. einem Abwasserkanal. Der Probenehmer 1 ist über ein abschliessbares Gehäuse 5 gegen unerlaubte Zugriffe auf die entnommenen Proben gesichert.

Das Gehäuse 5 des Probenehmers 1 besteht aus einem Unterteil 2, einem Oberteil 3 und einem Deckel 4. Die Aussenfläche des Gehäuses ist UV-stabilisiert, also resistent gegen UV-Strahlen, und antistatisch ausgebildet. Antistatisch bzw. leitfähig bedeutet hierbei, dass der Oberflächenwiderstand kleiner ist als 1GΩ. Hierdurch wird ein elektrisches Aufladen des Gehäuses 5 des Probenehmers 1 vermieden, was eine wichtige Voraussetzung dafür ist, dass der Probenehmer 1 in einer explosionsgefährdeten Atmosphäre eingesetzt werden kann. Unterteil 2 und Oberteil 3 des Gehäuses 5 sind über seitlich angebrachte Schlösser 18 miteinander verbindbar. Der Deckel 4 ist über das Schloss 17 an dem Oberteil 3 sicherbar. Am Oberteil 3 sind seitlich zwei Handgriffe 21 zur Erleichterung des Transportes des Probenehmers 1 an seine unterschiedlichen Einsatzorte vorgesehen.

Im Unterteil 2 des Gehäuses 5 sind die Probebehälter 13 in der Flaschenverteilung 12 angeordnet. Sukzessive werden die Probebehälter 13 in zeitlichen Abständen mit jeweils einer definierten aus der Probeentnahmestelle entnommenen Probemenge gefüllt. Der Niederhalter 20 sorgt dafür, dass die die Probebehälter 13 in der gewünschten Position fixiert sind. Gefördert werden die Proben mittels der Pumpeinheit 8, bei der es sich im gezeigten Fall um eine Schlauchpumpe handelt. Die abgefüllte Probemenge wird über einen Sensor 10 detektiert. Im dargestellten Fall handelt es sich um einen Drucksensor 10, der Druckschwankungen in der Leitung 14 detektiert und anhand dieser Druckschwankungen Information über die in der Leitung 14 geförderte Probemenge liefert. Es versteht sich von selbst, dass auch andere Detektionsverfahren zur Bestimmung der geförderten Probemenge in Zusammenhang mit dem erfindungsgemässen Probenehmer zum Einsatz kommen können.

Um das folgerichtige Befüllen der Probebehälter 13 mit den Proben sicherzustellen, ist eine zweite Antriebseinheit 11 vorgesehen. Bei dieser Antriebseinheit 11 handelt es sich um einen sogenannten Drehhahnantrieb.

Das Abfüllen der Proben in die einzelnen Probebehälter 13 erfolgt über die Steuereinheit 6. Die Steuereinheit 6, sprich die Elektronik, befindet sich oberhalb des im Unterteil 2 untergebrachten 'Nassraums' des Gehäuses 5.

Zwecks Energieversorgung des Probenehmers 1 ist gemäß ferner eine interne Energiversorgung 7 vorgesehen, die ggf. von einer - hier nicht dargestellten - externen Energieversorgung zumindest temporär gespeist ist. Beispielsweise kann es sich bei der internen Energieversorgungseinheit 7 um einen Akkumulator, also eine wiederaufladbare Batterie, handeln, der in einem entsprechend vorgesehenen, insb. innerhalb des geschlossenen Gehäuses15 Akkufach 15 angeordneten, untergebracht ist.

Der erfindungsgemässe Probenehmer 1 ist besonders für den Einsatz in explosionsgefährdeten Bereichen geeignet. Infolgedessen ist der Probenehmer so ausgebildet, daß er die besondere Sicherheitsanforderungen, die an Geräte für explosionsgefährdete Bereiche gestellt werden erfüllt. Diese Sicherheitsanforderungen haben das Ziel eine Funkenbildung, die ggf. eine Explosion auslösen könnte, zu vermeiden und/oder zu verhindern, dass ein im Inneren eines abgeschlossenen des Geräts Raumes entstehender Funke Auswirkungen auf die Umgebung hat. Dieses Ziel ist auf verschiedene Arten, die in den eingangs erwähnten entsprechenden Europäischen Normen beispielsweise als Zündschutzarten bezeichnet sind, erreichbar. In der USA, in Kanada, in Japan und anderen Ländern gibt es, wie bereits erwähnt, mit diesen Europäischen Normen vergleichbare Standards.

Um den Einsatz des Probenehmers in explosionsgefährdeten Bereichen auch bei einem möglichst geringen Probenehmer-Gesamtgewicht und einer handhabbaren Probenehmer-Gesamtgröße zu ermöglichen, sind die einzelnen Komponenten 6, 7, 8, 9, 10 des Probenehmers modular aufgebaut, wobei jedes Modul so ausgestaltet ist, dass es einer vorgegebenen Zündschutzart genügt. Die Zündschutzarten sind individuell optimal an die speziellen Anforderungen, die an die jeweilige Komponente zu stellen sind, angepasst.

Gemäß einer Ausgestaltung der Erfindung ist das Sensormodul 10 zur Detektion der geförderten Probenmenge so ausgestaltet, dass es der Zündschutzart `EEx ib' genügt, das bedeutet, dass das Sensormodul 10 eigensicher ist. Eigensicherheit wiederum bedeutet, dass die von dem Sensormodul 10 benötigte Energie so gering ist, dass keine Funkenbildung auftreten kann. Zusätzlich sind alle sicherheitswesentlichen Komponenten des Sensormoduls 10 zweifach bzw. redundant gesichert.

Die Energieversorgungseinheit 7 ist nach einer Ausgestaltung der Erfindung so designt, dass sie der Zündschutzart 'EEx e' genügt. Hinter dieser Bezeichnung verbirgt sich - wie bereits an vorhergehender Stelle erwähnt - eine erhöhte Sicherheitsstufe. Aufgrund der zuvor genannten Ausgestaltungen sind auch diese Komponenten in Umgebungen einsetzbar, in denen eine explosionsfähige Atmosphäre temporär auftreten kann.

Gemäß einer weiteren Ausgstaltung des Probenehmers ist an dessen Gehäuse 15 der Energieversorgungseinheit 7 eine Membran 16 vorgesehen, die den Gasaustausch zwischen dem Innenraum und dem Aussenraum des Gehäuses 15 ermöglicht. Bevorzugt handelt es sich bei der Energieversorgungseinheit 7 um einen Akku. Die Energieversorgungseinheit 7 ist so ausgebildet, dass sie der Zündschutzart `EEx e' genügt. Somit ist es möglich, den Akku in den Probenehmer 1 zu integrieren. Die Membran 16, bei der es sich bevorzugt um eine Goretexmembran handelt, ist in den Deckel des Akkufachs 15 integriert und ermöglicht den notwendigen Luftaustausch mit der Umgebung. Würde dieser Luftaustausch nicht stattfinden können, würde in dem geschlossenen Gehäuse, das das Energieversorgungsmodul 7 enthält, während des Ladevorgangs die Wasserstoffkonzentration ansteigen, was im Hinblick auf den geplanten Einsatzort des Probenehmers 1 durchaus problematisch wäre. Bevorzugt handelt es sich bei der Energieversorgungseinheit 7 um einen Bleigel-Akku, der den Vorteil hat, dass er auslaufsicher und wartungsarm ist. Hierdurch kann auf eine separate Ablassöffnung im Gehäuse 15 des Akkus verzichtet werden kann.

Die Steuereinheit 6 genügt gleichzeitig der Zündschutzart 'EEx ib' und der Zündschutzart 'EEx m'. Die zuerst genannte Zündschutzart bedeutet, dass die Steuereinheit 6 eigensicher ausgelegt ist; weiterhin hat sie eine Kapselung. Bei der Kapselung handelt es sich um eine Vergusskapselung, eine Ölkapselung oder eine Sandkapselung. Insbesondere sind die Sicherungen vergossen.

Wie bereits an vorhergehender Stelle erwähnt, hat der Probenehmer 1 auch eine Kühleinheit 19. Diese Kühleinheit 19 ist bevorzugt als Zeolith-Adsorptionsaggregat vor. Dies ist insofern günstig, da ein Zeolith-Adsorptionsaggregat im Hinblick auf den Einsatz in explosionsgefährdeten Bereichen völlig unproblematisch ist, da es keine Energieversorgung benötigt.

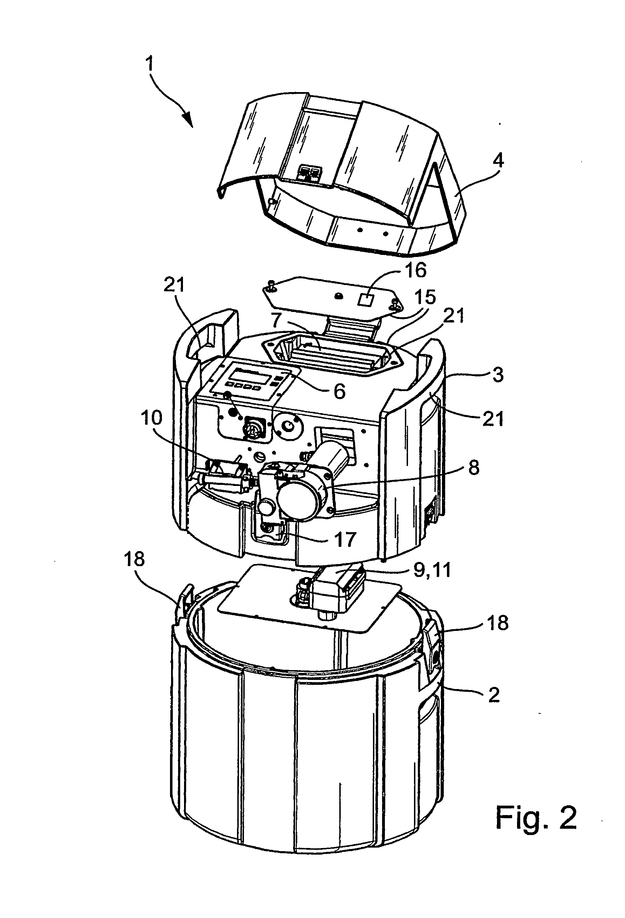

Fig. 2 zeigt die bereits im Zusammenhang mit Fig. 1 beschriebenen wesentllichen Module 6, 7, 8, 9, 10 bzw. Komponenten des erfindungsgemässen Probenehmers 1 in einer übersichtlichen Explosionsdarstellung.

### Bezugszeichenliste

- 1: Probenehmer
- 2: Unterteil
- 3: Oberteil
- 4: Deckel
- 5: Gehäuse
- 6: Steuereinheit
- 7: Energieversorgungseinheit
- 8: Pumpeinheit / Schlauchpumpe
- 9: erste Antriebseinheit
- 10: Drucksensor
- 11: zweite Antriebseinheit / Drehhahnmotor
- 12: Aufnahmeeinheit für Probebehältern / Flaschenverteilung
- 13: Probebehälter
- 14: Leitung
- 15: Gehäuse
- 16: Membran
- 17: Schloss
- 18: Schloss
- 19: Kühleinheit
- 20: Niederhalter
- 21: Handgriff

## Patentansprüche

1. Tragbarer Probenehmer (1) für den Einsatz in einem explosionsgefährdeten Bereich mit einem Gehäuse (5), in dem mindestens folgende Komponenten angeordnet sind: eine Pumpeinheit (8) mit einer ersten Antriebseinheit (9), ein Sensor (10) zur Bestimmung der Probemenge, die von der Pumpeinheit (8) gefördert wird,
eine Steuereinheit (6), die die Entnahme einer gewünschten Probemenge und das Abfüllen in zumindest ein Behältnis (13) steuert, und
mindestens eine Energieversorgungseinheit (7), die die Energie zum Betreiben der ersten Antriebseinheit (9), des Sensors (14) und der Steuereinheit (6) bereitstellt,
wobei die Komponenten (6, 7, 9, 10) modular aufgebaut sind und
wobei jedes Modul (6, 7, 9, 10) so ausgestaltet ist, dass es einer vorgegebenen Zündschutzart genügt,
wobei die Steuereinheit (6) so ausgestaltet ist, dass sie gleichzeitig der Zündschutzart 'EEx ib' und der Zündschutzart 'EEx m' genügt,
wobei die Energieversorgungseinheit (7) so ausgestaltet ist, dass sie der Zündschutzart 'EEx e' genügt
wobei die erste Antriebseinheit (9) so ausgestaltet ist, dass sie der Zündschutzart 'EEx d' genügt,
und wobei das Sensormodul (10) so ausgestaltet ist, dass es der Zündschutzart 'EEx ib' genügt.

2. Probenehmer nach Anspruch 1,
wobei es sich bei der ersten Antriebseinheit (9) um einen Motor zum Betreiben einer Schlauchpumpe handelt.

3. Probenehmer nach Anspruch 2,
wobei eine zweite Antriebseinheit (11) zum automatischen Abfüllen von Proben in eine Vielzahl von Behältnissen (13) vorgesehen ist, und
wobei die zweite Antriebseinheit (11) modular aufgebaut ist und einer vorgegebenen Zündschutzart genügt.

4. Probenehmer nach Anspruch 2 oder 3,
wobei die erste Antriebseinheit (9) und die zweite Antriebseinheit (11) der Zündschutzart 'EEx d' genügen.

5. Probenehmer nach Anspruch 1, 2 oder 4,
wobei es sich bei der Pumpeinheit (8) um eine Schlauchpumpe und bei dem Sensor (10) um einen Drucksensor handelt, der anhand der Druckschwankungen in einer Leitung (14) der Schlauchpumpe die durch die Leitung (14) strömende Probemenge bestimmt.

6. Probenehmer nach Anspruch 1 oder 5,
wobei der Drucksensor (10) der Zündschutzart 'EEx ib' genügt.

7. Probenehmer nach Anspruch 1,
wobei an dem Gehäuse (15) der Energiespeichereinheit (7) eine Membran (16) vorgesehen ist, die den Gasaustausch zwischen dem Innenraum und dem Aussenraum des Gehäuses (15) ermöglicht.

8. Probenehmer nach Anspruch 1,
wobei eine Kühleinheit (19) vorgesehen ist und
wobei es sich bei der Kühleinheit (19) bevorzugt um ein Zeolith-Adsorptionsaggregat handelt.

9. Probenehmer nach Anspruch 1,
wobei die Aussenfläche des Gehäuses (5) UV-stabilisiert und antistatisch ausgebildet ist.

## Claims

1. Portable sampler (1) for use in an explosive area with a housing (5) in which the following components, at least, are arranged: a pump unit (8) with a first drive unit (9), a sensor (10) for determining the quantity of sample that is pumped by the pump unit (8),
a control unit (6) that controls the removal of a desired quantity of sample and the transfer into at least one vessel (13), and
at least one power supply unit (7), which provides the energy to operate the first drive unit (9), the sensor (14) and the control unit (6),
wherein the components (6, 7, 9, 10) have a modular design and wherein every module (6, 7, 9, 10) is designed in such a way that it satisfies the requirements of a prespecified type of protection,
wherein the control unit (6) is designed in such a way that it simultaneously satisfies the requirements of "EEx ib" and "EEx m" type of protection,
wherein the power supply unit (7) is designed in such a way that it satisfies the requirements of "EEx e" type of protection,
wherein the first drive unit (9) is designed in such a way that it satisfies the requirements of "EEx d" type of protection,
and wherein the sensor module (10) is designed in such a way that it satisfies the requirements of "EEx ib" type of protection.

2. Sampler as claimed in Claim 1,
wherein the first drive unit (9) is a motor for operating a peristaltic pump.

3. Sampler as claimed in Claim 2,
wherein a second drive unit (11) is provided for the automatic transfer of samples to a multitude of vessels (13), and wherein the second drive unit (11) has a modular design and satisfies the requirements of a prespecified type of protection.

4. Sampler as claimed in Claim 2 or 3,
wherein the first drive unit (9) and the second drive unit (11) satisfy the requirements of "EEX d" type of protection.

5. Sampler as claimed in Claim 1, 2 or 4,
wherein the pump unit (8) is a peristaltic pump and wherein the sensor (10) is a pressure sensor, which determines the quantity of sample flowing through a tube (14) of the peristaltic pump based on the pressure fluctuations in the tube (14).

6. Sampler as claimed in Claim 1 or 5,
wherein the pressure sensor (10) satisfies the requirements of "EEx ib" type of protection.

7. Sampler as claimed in Claim 1,
wherein a membrane (16) is provided on the housing (15) of the energy storage unit (7), said membrane enabling the exchange of gas between the inner compartment and outer compartment of the housing (15).

8. Sampler as claimed in Claim 1,
wherein a cooling unit (19) is provided and
wherein the cooling unit (19) is preferably a zeolite adsorption unit.

9. Sampler as claimed in Claim 1,
wherein the outer surface of the housing (5) is UV-stabilized and anti-static.

## Revendications

1. Préleveur d'échantillons (1) portable pour une utilisation dans une zone explosible, avec un boîtier (5), dans lequel sont disposés au minimum les composants suivants : une unité de pompe (8) avec une première unité d'entraînement (9), un capteur (10) destiné à la détermination de la quantité d'échantillons, qui est refoulée par l'unité de pompe (8),
une unité de commande (6), qui pilote le prélèvement d'une quantité d'échantillons souhaitée et le remplissage d'au moins un récipient (13), et au moins une unité d'alimentation en énergie (7), qui met à disposition l'énergie destinée à exploiter la première unité d'entraînement (9), le capteur (14) et l'unité de commande (6),
pour lequel les composants (6, 7, 9, 10) sont structurés de façon modulaire et pour lequel chaque module (6, 7, 9, 10) est conçu de telle sorte à satisfaire à un mode de protection prédéfini,
pour lequel l'unité de commande (6) est conçue de telle sorte à satisfaire en même temps au mode de protection 'EEx ib' et au mode de protection 'EEx m',
pour lequel l'unité d'alimentation en énergie (7) est conçue de telle sorte à satisfaire au mode de protection 'EEx e',
pour lequel l'unité d'entraînement (9) est conçue de telle sorte à satisfaire au mode de protection 'EEx d',
pour lequel le module capteur (10) est conçu de telle sorte à satisfaire au mode de protection 'EEx ib',

2. Préleveur d'échantillons selon la revendication 1,
pour lequel il s'agit, concernant la première unité d'entraînement (9), d'un moteur destiné à entraîner une pompe tubulaire.

3. Préleveur d'échantillons selon la revendication 2,
pour lequel est prévue une deuxième unité d'entraînement (11) destinée au remplissage automatique d'échantillons dans un grand nombre de récipients (13), et pour lequel la deuxième unité d'entraînement (11) est structurée de façon modulaire et satisfait à un mode de protection prédéfini.

4. Préleveur d'échantillons selon la revendication 2 ou 3,
pour lequel la première unité d'entraînement (9) et la deuxième unité d'entraînement (11) satisfont au mode de protection 'EEx d'.

5. Préleveur d'échantillons selon la revendication 1, 2 ou 4,
pour lequel il s'agit, concernant l'unité de pompe (8), d'une pompe tubulaire et, concernant le capteur (10), d'un capteur de pression, qui détermine sur la base des fluctuations de pression dans une conduite (14) de la pompe tubulaire la quantité d'échantillons circulant à travers la conduite (14).

6. Préleveur d'échantillons selon la revendication 1 ou 5,
pour lequel le capteur de pression (10) satisfait au mode de protection 'EEx ib'.

7. Préleveur d'échantillons selon la revendication 1,
pour lequel est prévue, sur le boîtier (15) de l'unité d'accumulation d'énergie (7), une membrane (18), qui permet l'échange gazeux entre l'intérieur et l'extérieur du boîtier (15).

8. Préleveur d'échantillons selon la revendication 1,
pour lequel est prévue une unité de refroidissement (19) et
pour lequel il s'agit, concernant l'unité de refroidissement (19), de préférence d'une unité d'adsorption de zéolite.

9. Préleveur d'échantillons selon la revendication 1,
pour lequel la surface extérieure du boîtier (5) est formée de manière résistante aux UV et antistatique.
